# EUROPÄISCHE PATENTSCHRIFT

(11) **EP 0 653 620 B1**
(45) Veröffentlichungstag und Bekanntmachung des Hinweises auf die Patenterteilung: **12.09.2001**
(21) Anmeldenummer: 94116032.7
(22) Anmeldetag: 11.10.1994
(51) Int. Cl.: G01N 21/03, D06F 39/00

(54) **Optischer Sensor**
Optical sensor
Capteur optique

(30) Priorität: 26.10.1993 DE 4336520
(43) Veröffentlichungstag der Anmeldung: 17.05.1995
(73) Patentinhaber: SIEMENS AKTIENGESELLSCHAFT, 80333 München (DE)
(72) Erfinder: Freitag, Reinhard, D-81379 München (DE); Meixner, Hans, Prof. Dr., D-85540 Haar (DE)

(56) Entgegenhaltungen:
- EP-A- 0 186 712
- EP-A- 0 393 311
- EP-A- 0 404 258
- DE-A- 3 835 347

## Beschreibung

In modernen Waschmaschinen werden die Wasch- und Spülvorgänge mit Hilfe einer elektronischen Steuereinheit überwacht und hinsichtlich des Energie- und Wasserverbrauchs optimiert. Als Meßwertgeber für die beispielsweise aus den GB 2 068 419 A, US 4,222,250 und EP 0 393 311 A1 bekannten Steuereinheiten dienen sogenannte Trübungssensoren, deren Ausgangssignal ein Maß für die in der Waschlauge suspendierte Zeolithmenge (Wasserenthärter des Waschmittels) bzw. ein Maß für die Menge der durch die Tenside des Waschmittels hervorgerufenen Luftbläschen darstellt. Trübungssensoren bestehen üblicherweise aus einer Infrarotstrahlung emittierenden Leuchtdiode, einem Fototransistor und einem die beiden Komponenten aufnehmenden Gehäuse, das am Boden der Waschtrommel oder in einem Laugenabflußrohr angeordnet ist.

Die EP 0 186 712 A1 beschreibt einen Sensor zur Messung des Trübungsgrades einer Flüssigkeit. Der Sensor besteht im wesentlichen aus einer Strahlungsquelle, einem Detektor und einem zwischen diesen Komponenten angeordneten, mit der zu untersuchenden Flüssigkeit gefüllten Küvette. Sowohl im Bereich des eintretenden Strahlenbündels als auch im Bereich des austretenden Strahlenbündels ist die Wandung der Küvette jeweils linsenförmig ausgebildet, wobei das bestrahlungsseitige Linsenelement kollimierend und das detektorseitige Linsenelement fokussierend wirkt. Um die kollimierende Wirkung der Linsenelemente für die fotometrische Messung optimal auszunutzen, sind die Strahlungsquelle und der Detektor in definierten Abständen vor bzw. hinter der Küvette auf der optischen Achse des Systems angeordnet.

Der aus der US 5,068,798 bekannte Gasanalysator besteht im wesentlichen aus einer IR-Strahlungsquelle, einer das zu un tersuchende Gas enthaltenen Probenkammer und einem IR-Spektrometer. In der Probenkammer sind zwei jeweils konkav gekrümmte Spiegel derart gegenüberliegend angeordnet, daß sie die über ein Fenster eingekoppelte IR-Strahlung erst nach einer Vielzahl von Reflexionen in Richtung des Austrittsfensters umlenken.

Gegenstand der Erfindung ist ein optischer Sensor, mit dem sich eindeutig feststellen läßt, ob ein Behältnis ein gasförmiges oder ein flüssiges Medium enthält. Der optische Sensor soll insbesondere auch den Trübungsgrad des flüssigen Mediums erfassen können. Diese Aufgabe wird erfindungsgemäß durch einen optischen Sensor gelöst, der die Merkmale der Patentansprüche 1 oder 2 aufweist.

Der mit der Erfindung erzielbare Vorteil besteht insbesondere darin, daß man den Trübungssensor aufgrund der möglichen Luft/Wasserunterscheidung auch als Trockengehschutz in einer Wasch- oder Spülmaschine einsetzen kann.

Die abhängigen Ansprüche betreffen vorteilhafte Weiterbildungen und Ausgestaltungen der im folgenden anhand der Zeichnungen erläuterten Erfindung. Hierbei zeigt:
- Figur 1: ein erstes Ausführungsbeispiel eines Trübungssensors;
- Figur 2: die jeweils am Fototransistor des Trübungssensors gemessene Intensität der IR-Strahlung bei Verwendung verschiedener Meßrohre und
- Figur 3: ein zweites Ausführungsbeispiel eines Trübungssensors.

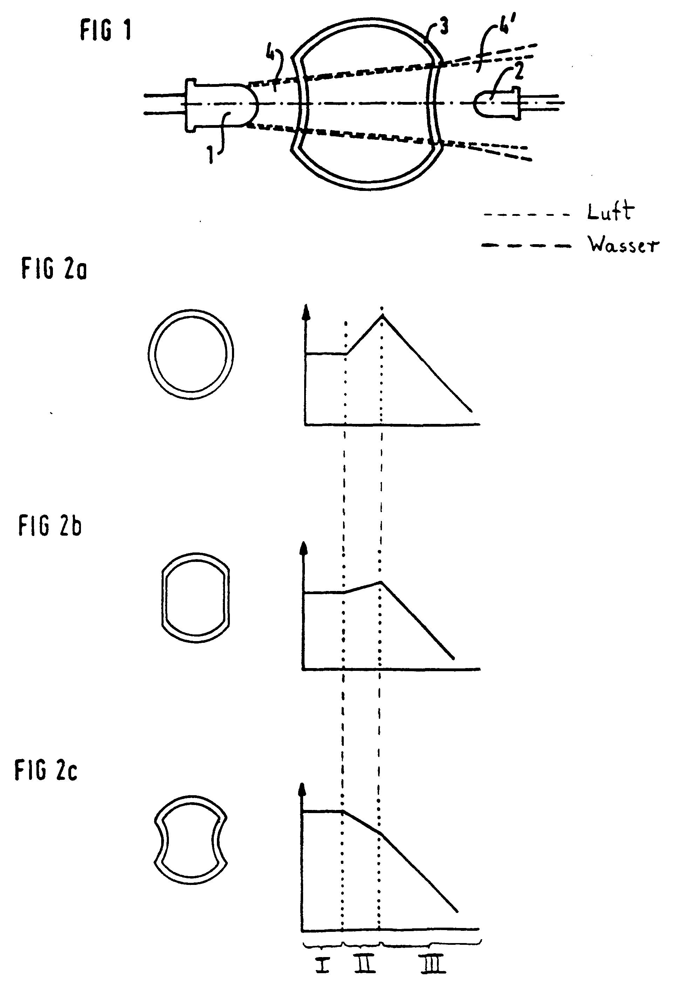

Der in Fig. 1 schematisch dargestellte Trübungssensor besteht aus einer Infrarotstrahlung 4 emittierenden Leuchtdiode 1, einem Fototransistor 2 und einem zwischen diesen beiden Komponenten angeordneten Meßrohr 3. Da das aus einem transparenten und chemikalienbeständigen Kunststoff (z. B. Polypropylen) oder Glas gefertigte Meßrohr 3 mit der Wäschetrommel in Verbindung steht, führt es während der Wasch- und Spülvorgänge mehr oder weniger trübe Waschlauge bzw. Wasser oder bei unterbrochener Wasserzufuhr Luft. Um die beiden Zustände "Wasser/Waschlauge im Meßrohr" und "Luft im Meßrohr" durch Messung der Intensität der transmittierten IR-Strahlung 4' eindeutig voneinander unterscheiden zu können, ist das Meßrohr 3 auf der der Leuchtdiode 1 und dem Fototransistor 2 zugewandten Seite jeweils leicht kugelförmig nach innen gewölbt. Wassergefüllt wirkt das Meßrohr 3 dann als schwache Zerstreuungslinse, die das von der Leuchtdiode 1 emittierte IR-Strahlenbündel 4 im Bereich des Fototransistors 2 aufweitet lang gestrichelter Strahlengang in Fig. 1). Nahezu keine Linsenwirkung entfaltet hingegen das mit Luft gefüllte Meßrohr 3. Es läßt das IR-Strahlenbündel 4 ungebeugt zum Fototransistor 2 gelangen (s. kurzgestrichelter Strahlengang in Fig. 1), der in diesem Fall eine entsprechend höhere IR-Intensität mißt.

Qualitativ ergibt sich damit der in Fig. 2c dargestellte Intensitätsverlauf am Fototransistor 2. Die maximale Intensität liefert das luftgefüllte Meßrohr 3 (Bereich). Mit dem Ansteigen des Wasserspiegels im Meßrohr 3 kommt die zerstreuende Wirkung des Systems immer stärker zum Tragen und die Intensität am Fototransistor 2 nimmt solange ab, bis das Meßrohr 3 vollständig mit Wasser gefüllt ist (Bereich II).

Die Zugabe von Waschmittel hat eine Trübung des Wassers zur Folge, wodurch sich dessen Absorptionsvermögen erhöht und weniger IR-Strahlung zum Fototransistor 2 gelangt (Bereich III).

Im oberen Teil der Fig. 2 sind die entsprechenden Intensitätsverläufe am Fototransistor 2 bei Verwendung von Meßrohren mit kreisförmigem Querschnitt (Fig. 2a) bzw. mit planparallelen Ein- und Austrittsfenstern (Fig. 2b) dargestellt. Man erkennt deutlich, daß nur das erfindungsgemäß ausgebildete Meßrohr eine sichere Unterscheidung des Übergangs Luft/Wasser erlaubt. Die beiden anderen Ausführungsformen lassen nicht ohne weiteres erkennen, ob das Meßrohr Luft oder Wasser eines bestimmten Trübungsgrades enthält.

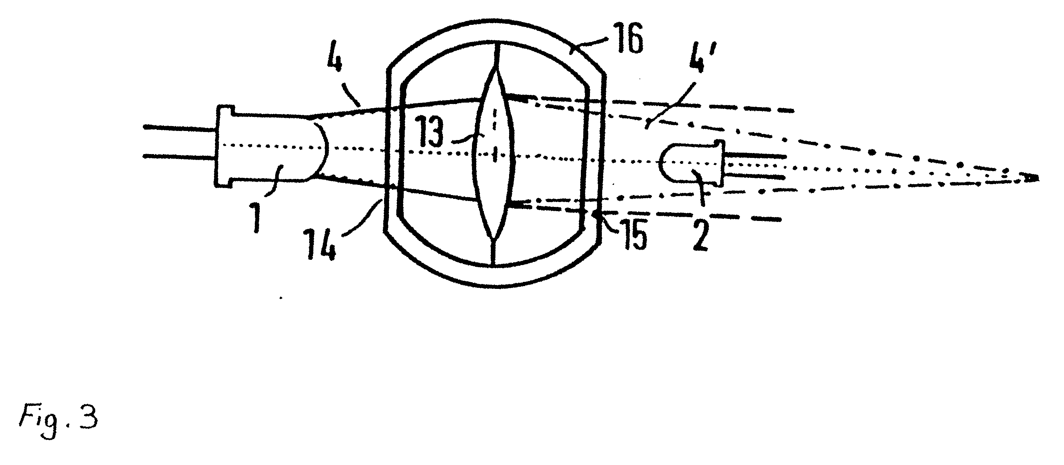

Die Figur 3 zeigt einen Trübungssensor, dessen Meßrohr 16 planparallele Ein- und Austrittsfenster 14/15 aufweist. Im Innern des Meßrohrs 16 ist eine plankonvexe oder bikonvexe Linse 13 angeordnet. Da die Intensität der IR-Strahlung am Ort des Fototransistors 2 der im rechten Teil der Figur 2c dargestellten Kurve folgt, läßt sich eindeutig erkennen, ob das Meßrohr 16 Luft oder Wasser bzw. Waschlauge eines bestimmten Trübungsgrades enthält.

Die Erfindung beschränkt sich selbstverständlich nicht auf die beschriebenen Ausführungsbeispiele. So ist es ohne weiteres möglich
- die Leuchtdiode durch eine andere Strahlungsquelle, insbesondere durch ein sichtbares Licht emittierendes Element zu ersetzen,
- anstelle des Fototransistors ein Fotoelement, eine Fotodiode oder einen Fotowiderstand zu verwenden,
- die Strahlungsquelle und den Strahlungsdetektor in den Schenkeln eines u-förmigen Halterungsteils anzuordnen und das Meßrohr zwischen den Schenkeln zu befestigen und
- das transmittierte Strahlenbündel mit Hilfe eines Spiegels in Richtung des Strahlungsdetektors umzulenken.

Die beschriebenen optischen Sensoren lassen sich nicht nur in Waschmaschinen oder Spülmaschinen, sondern auch in Systemen zur Überwachung der Wassertrübung und in medizinischen Geräten, beispielsweise zur Urin- oder Blutplasmaüberwachung einsetzen.

## Patentansprüche

1. Optischer Sensor,
mit einer ein Strahlenbündel (4) erzeugenden Strahlungsquelle (1), einem strahlungsempfindlichen Detektor (2), sowie einem mit einem gasförmigen und/oder flüssigen Medium gefüllten Behältnis (3), das derart bezüglich der Strahlungsquelle (1) und des Detektors (2) angeordnet ist, daß ein von der Strahlungsquelle (1) ausgehendes Strahlenbündel (4) das Behältnis (3) durchsetzt und zum Detektor (2) gelangt,
**dadurch gekennzeichnet**,
daß die Wandung des Behältnisses (3) sowohl im Bereich des eintretenden Strahlenbündels (4) als auch im Bereich des austretenden Strahlenbündels (4') bei gleichbleibender Wandstärke jeweils kugelförmig nach innen gewölbt ist, so daß das flüssigkeitsgefüllte Behältnis (3) als Zerstreuungslinse wirkt.

2. Optischer Sensor,
mit einer ein Strahlenbündel (4) erzeugenden Strahlungsquelle (1), einem strahlungsempfindlichen Detektor (2), sowie einem mit einem gasförmigen und/oder flüssigen Medium gefüllten Behältnis (3), das derart bezüglich der Strahlungsquelle (1) und des Detektors (2) angeordnet ist, daß ein von der Strahlungsquelle (1) ausgehendes Strahlenbündel (4) das Behältnis (3) durchsetzt und zum Detektor (2) gelangt,
**dadurch gekennzeichnet**,
daß die Wandung des Behältnisses (16) im Bereich des eintretenden Strahlenbündels (4) und im Bereich des austretenden Strahlenbündels (4') jeweils als planparallele Fläche (14, 15) ausgebildet ist und daß eine Plan- oder Bikonvexlinse (13) innerhalb des Behältnisses (16) im Strahlenbündel zwischen den planparallelen Flächen (14, 15) angeordnet ist, so daß ein luftgefülltes Behältnis (16) stärker fokussierend wirkt als ein flüssigkeitsgefülltes Behältnis (16).

3. Optischer Sensor nach Anspruch 1 oder 2,
**dadurch gekennzeichnet**, daß das Behältnis (3, 16) aus Glas oder einem transparenten Kunststoff besteht.

4. Optischer Sensor nach einem der Ansprüche 1 bis 3,
**gekennzeichnet durch** eine Leuchtdiode oder Glühlampe als Strahlungsquelle (1).

5. Optischer Sensor nach einem der Ansprüche 1 bis 4,
**gekennzeichnet durch** eine Photodiode, einen Phototransistor oder einen Photowiderstand als Detektor (2).

6. Verwendung eines optischen Sensors nach einem der vorhergehenden Ansprüche als Trübungssensor und/oder Trockengehschutz in einer Wasch- oder Spülmaschine.

## Claims

1. Optical sensor, with a radiation source (1) producing a beam (4), a radiation-sensitive detector (2), and a container (3) which is filled with a gaseous and/or liquid medium and is arranged in such a way with respect to the radiation source (1) and the detector (2) that a beam (4) emanating from the radiation source (1) passes through the container (3) and reaches the detector (2), **characterized in that** the wall of the container (3) is curved spherically inwards both in the region of the entering beam (4) and in the region of the exiting beam (4'), with the wall thickness remaining the same, so that the liquid-filled container (3) acts as a diverging lens.

2. Optical sensor, with a radiation source (1) producing a beam (4), a radiation-sensitive detector (2), and a container (3) which is filled with a gaseous and/or liquid medium and is arranged in such a way with respect to the radiation source (1) and the detector (2) that a beam (4) emanating from the radiation source (1) passes through the container (3) and reaches the detector (2), **characterized in that** the wall of the container (16) is formed as a plane-parallel surface (14, 15) in the region of the entering beam (4) and in the region of the exiting beam (4') and in that a plane or biconvex lens (13) is arranged within the container (16) in the beam between the plane-parallel surfaces (14, 15), so that an air-filled container (16) acts with a greater focusing effect than a liquid-filled container (16) .

3. Optical sensor according to Claim 1 or 2, **characterized in that** the container (3, 16) consists of glass or a transparent plastic.

4. Optical sensor according to one of Claims 1 to 3, **characterized by** a light-emitting diode or incandescent lamp as the radiation source (1).

5. Optical sensor according to one of Claims 1 to 4, **characterized by** a photodiode, a phototransistor or a photoresistor as the detector (2).

6. Use of an optical sensor according to one of the preceding claims as a turbidity sensor and/or protection against running-dry in a washing machine or dishwasher.

## Revendications

1. Capteur optique,
comprenant une source (1) de rayonnement produisant un faisceau (4) de rayons, un détecteur (2) sensible aux rayonnements, ainsi qu'un récipient (3) empli d'un fluide gazeux et/ou liquide disposé, par rapport à la source (1) de rayonnement et au détecteur (2), de façon qu'un faisceau (4) de rayons issu de la source (1) de rayonnement traverse le récipient (3) et arrive au détecteur (2),
**caractérisé**
**en ce que** la paroi du récipient (3) est, tant dans la région du faisceau (4) de rayons incident que dans la région du faisceau (4') de rayons sortant, incurvée vers l'intérieur respectivement en forme de sphère, tout en conservant la même épaisseur de paroi, de façon que le récipient (3) empli de liquide agisse en tant que lentille de dispersion.

2. Capteur optique,
comprenant une source (1) de rayonnement produisant un faisceau (4) de rayons, un détecteur (2) sensible aux rayonnements, ainsi qu'un récipient (3) empli d'un fluide gazeux et/ou liquide disposé, par rapport à la source (1) de rayonnement et au détecteur (2), de façon qu'un faisceau (4) de rayons issu de la source (1) de rayonnement traverse le récipient (3) et arrive au détecteur (2),
**caractérisé**
**en ce que** la paroi du récipient (16) est constituée dans la région du faisceau (4) de rayons incident et dans la région du faisceau (4') de rayons sortant, respectivement sous la forme de surfaces (14, 15) parallèles à un plan et en ce qu'une lentille (13) plan convexe ou biconvexe est montée à l'intérieur du récipient (16) dans le faisceau de rayons compris entre les surfaces (14, 15) parallèles à un plan, de sorte qu'un récipient empli d'air a une action bien plus focalisante qu'un récipient (16) empli de liquide.

3. Capteur optique suivant la revendication 1 ou 2,
**caractérisé en ce que** le récipient (3, 16) est en verre ou en une matière plastique transparente.

4. Capteur suivant l'une des revendications 1 à 3, **caractérisé par** une diode luminescente ou une lampe à incandescence en tant que source (1) de rayonnement.

5. Capteur suivant l'une des revendications 1 à 4, **caractérisé par** une photodiode, un phototransistor ou une photorésistance en tant que détecteur (2).

6. Utilisation d'un capteur optique suivant l'une des revendications précédentes comme capteur de turbidité et/ou comme dispositif de protection de marche à sec dans une machine à laver le linge ou dans un lave-vaisselle.
